# EUROPÄISCHE PATENTSCHRIFT

(11) **EP 3 365 202 B1**
(45) Veröffentlichungstag und Bekanntmachung des Hinweises auf die Patenterteilung: **26.06.2019**
(21) Anmeldenummer: 16816248.5
(22) Anmeldetag: 14.12.2016
(51) Int. Cl.: B60R 25/00, H04L 9/00

(54) **KRAFTFAHRZEUG-DACHANTENNENMODUL, KRAFTFAHRZEUG UND VERFAHREN ZUM BETREIBEN DES DACHANTENNENMODULS**
MOTOR VEHICLE ROOF ANTENNA MODULE, MOTOR VEHICLE AND METHOD FOR OPERATING THE ROOF ANTENNA MODULE
MODULE D'ANTENNE DE TOIT DE VÉHICULE AUTOMOBILE, VÉHICULE AUTOMOBILE ET PROCÉDÉ DE FONCTIONNEMENT DU MODULE D'ANTENNE DE TOIT

(30) Priorität: 15.12.2015 DE 102015016334
(43) Veröffentlichungstag der Anmeldung: 29.08.2018
(73) Patentinhaber: Audi AG, 85045 Ingolstadt (DE)
(72) Erfinder: PAPP, Aurel, 85123 Karlskron (DE); POHL, Andreas, 85095 Denkendorf (DE); SPEHL, Jürgen, 85139 Wettstetten (DE)
(86) Internationale Anmeldenummer: PCT/EP2016/080888
(87) Internationale Veröffentlichungsnummer: WO 2017/102787

(56) Entgegenhaltungen:
- DE-A1-102007 039 809
- DE-A1-102013 015 478
- DE-U1-202014 003 956
- US-A1- 2015 095 997

## Beschreibung

Die Erfindung betrifft ein Dachantennenmodul zum Anordnen auf einem Dach eines Kraftfahrzeugs. Durch das Dachantennenmodul sind zumindest ein Transceiver mit einer jeweiligen Antenne und zumindest ein Busanschluss zum Anschließen des Dachantennenmoduls an einen jeweiligen digitalen Kommunikationsbus des Kraftfahrzeugs bereitgestellt. Der zumindest eine Transceiver einerseits und der zumindest eine Busanschluss andererseits sind über eine Kommunikationssteuereinheit gekoppelt, welche Kommunikationsnachrichten zwischen dem zumindest einen Transceiver und dem zumindest einen Busanschluss übertragen kann. Zu der Erfindung gehören auch ein Kraftfahrzeug mit dem Dachantennenmodul sowie ein Verfahren zum Betreiben des Dachantennenmoduls.

Aus dem Stand der Technik ist bekannt, in ein Dachantennenmodul einen Mikrocontroller zu integrieren, um Kommunikationsnachrichten zwischen einem Transceiver und einem Kommunikationsbus zu übertragen. Aus der EP 1 903 632 A1 ist hierzu ein Antennenmodul bekannt, das mehrere Transceiver zum Erzeugen und Empfangen von Funksignalen des Mobilfunks, eines WLANs (Wireless Local Area Network) und eines Bluetooth-Geräts aufweist. Als Busanschlüsse können solche für ein CAN (Controller Area Network), ein LIN (Local Interconnect Network) oder einen MOST-Bus (MOST - Media Oriented Systems Transport) vorgesehen sein. Die Kommunikationsnachrichten können durch das Antennenmodul unter Einsatz verschiedener Diversity-Verfahren, beispielsweise Zeit- und Frequenzmultiplexing, übertragen werden.

Aus der US 2010/0202353 A1 ist ein Dachantennenmodul mit integriertem Mikrocontroller bekannt. Durch den Mikrocontroller wird ein Netzwerkknoten für ein LAN (Local Area Network) realisiert. Des Weiteren kann das Dachantennenmodul einen Radioempfänger sowie die bereits beschriebenen Transceiver für Mobilfunk und WLAN aufweisen. Schließlich ist auch ein GPS-Empfänger (GPS - Global Positioning System) vorgesehen.

Aus der DE 20 2014 003 956 U1 ist ein Gehäuse für ein Dachantennenmodul bekannt, in welchem Antennen, Transceiver und ein Mikrocontroller integriert sein können.

Dachantennenmodule, die eine direkte Kopplung von Transceivern für Funksignale einerseits und digitalen Kommunikationsbussen eines Kraftfahrzeugs andererseits ermöglichen, stellen ein Sicherheitsrisiko für den Betrieb des Kraftfahrzeugs dar. So ist es beispielsweise denkbar, dass während einer Fahrt des Kraftfahrzeugs eine Steuerinstruktion zum Auslösen einer Notbremsung per Funk an das Kraftfahrzeug ausgesendet wird und diese Steuerinstruktion durch das Dachantennenmodul in den Kommunikationsbus des Kraftfahrzeugs eingespeist und hierdurch tatsächlich die Vollbremsung ungewollt ausgelöst wird.

Dennoch ist die Integration eines Busanschlusses in ein Dachantennenmodul von Vorteil, da hierdurch der Verkabelungsaufwand für Leitungen zum Übertragen von hochfrequenten Signalen reduziert werden kann.

Aus der US 2015/095997 A1 ist bekannt, dass eine Kommunikation zwischen einem Server des Internets und einem Steuergerät eines Kraftfahrzeugs mittels einer Verschlüsselung vor einer Manipulation geschützt werden kann.

Der Erfindung liegt die Aufgabe zugrunde, in einem Kraftfahrzeug den Verdrahtungsaufwand zwischen einem Kommunikationsbus und einem Funksignal-Transceiver zu verringern, ohne hierdurch die Sicherheit beim Betrieb des Kraftfahrzeugs zu gefährden.

Die Aufgabe wird durch die Gegenstände der unabhängigen Patentansprüche gelöst. Vorteilhafte Weiterbildungen der Erfindung sind durch die abhängigen Patentansprüche, die Beschreibung und die Figuren angegeben.

Durch die Erfindung ist ein Dachantennenmodul zum Anordnen auf einem Dach eines Kraftfahrzeugs bereitgestellt. In der bekannten Weise weist das Dachantennenmodul zumindest einen Transceiver mit einer jeweiligen Antenne und zumindest einem Busanschluss zum Anschließen des Dachantennenmoduls an einen jeweiligen digitalen Kommunikationsbus des Kraftfahrzeugs auf. Der zumindest eine Transceiver ist mit dem zumindest einen Busanschluss über eine Kommunikationseinheit gekoppelt, die dazu eingerichtet ist, Kommunikationsnachrichten zwischen dem zumindest einen Transceiver einerseits und dem zumindest einen Busanschluss andererseits zu übertragen.

Um hierbei zu verhindern, dass als Kommunikationsnachricht eine unerwünschte oder schädliche Steuerinstruktion in den zumindest einen Kommunikationsbus eingespeist wird, sieht die Erfindung folgenden Schutz vor. Die Kommunikationseinheit weist eine Filtereinrichtung auf, die dazu eingerichtet ist, eine über den zumindest einen Transceiver per Funk von außerhalb des Kraftfahrzeugs empfangene und an einen Busteilnehmer des zumindest einen Kommunikationsbusses adressierte, in den Kommunikationsnachrichtenenthaltene Steuerinstruktion an den zumindest einen Busanschluss nur weiterzuleiten, falls die Steuerinstruktion ein vorbestimmtes Sicherheitskriterium erfüllt. Mit anderen Worten werden durch die Filtereinrichtung die Kommunikationsnachrichten dahingehend gefiltert, ob sie eine Steuerinstruktion enthalten, die an den zumindest einen Busanschluss weitergeleitet werden soll. Wird eine solche Steuerinstruktion erkannt, so wird diese daraufhin überprüft, ob sie das Sicherheitskriterium erfüllt. Durch das Sicherheitskriterium kann also festgelegt werden, welche Steuerinstruktion denn überhaupt per Funk in den zumindest einen Kommunikationsbus des Kraftfahrzeugs übertragen wird oder gelangen kann. Die Kommunikationssteuereinheit kann hierzu beispielsweise auf der Grundlage eines Mikroprozessor oder Mikrocontrollers realisiert sein. Entsprechend kann die Filtereinrichtung als ein Programmmodul der Kommunikationssteuereinheit realisiert sein. Eine Steuerinstruktion ist im Zusammenhang mit der Erfindung ein Befehl, welcher ein Betriebsverhalten des Busteilnehmers steuert oder einstellt. Als Busteilnehmer ist im Zusammenhang mit der Erfindung ein Steuergerät zu verstehen, das an den zumindest einen Kommunikationsbus angeschlossen ist und über den zumindest einen Kommunikationsbus Steuerinstruktionen empfangen kann, um den entsprechenden Befehl aus der Steuerinstruktion auszuführen oder umzusetzen, also eine entsprechende Funktion zu aktivieren oder deaktivieren.

Durch die Erfindung ergibt sich der Vorteil, dass eine per Funk empfangene Steuerinstruktion nicht ungeprüft in den zumindest einen Kommunikationsbus des Kraftfahrzeugs gelangen kann. Vielmehr wird eine unerwünschte Steuerinstruktion durch die Filtereinrichtung abgefangen. Welche Steuerinstruktionen unerwünscht sind, kann in einfacher Weise durch Festlegen des Sicherheitskriteriums eingestellt werden.

Im Zusammenhang mit der Erfindung ist unter einem Transceiver eine Einrichtung zum Wandeln eines Signals zwischen einer Funkfrequenz für die Antenne und einer Basisbandfrequenz für die Kommunikationssteuereinheit zu verstehen. Mit anderen Worten sind die Kommunikationsnachrichten als Funksignal mit einer Trägerfrequenz versehen, welche durch den Transceiver beim Aussenden erzeugt wird beziehungsweise beim Empfangen vom Transceiver wieder entfernt wird. Der Busanschluss ist dagegen vorgesehen, ohne Trägerfrequenz die digitalen Kommunikationsnachrichten mit anderen Busteilnehmern des Kraftfahrzeugs auszutauschen. Als Busanschluss kann beispielsweise ein solcher für ein CAN, einen FlexRay-Bus, einen MOST-Bus oder ein Ethernet-Netzwerk vorgesehen sein. Im Zusammenhang mit der Erfindung umfasst ein Busanschluss sowohl die mechanische Steckeranordnung als auch die nachgeschaltete physikalische Schicht gemäß dem ISO/OSI-Kommunikationsmodell (ISO - International Organization for Standardization, OSI - Open Systems Interconnection Model).

Als Transceiver kann beispielsweise ein Transceiver für Mobilfunk (GSM, UMTS, LTE), ein Transceiver für eine WLAN-Kommunikation (WiFi), ein Bluetooth-Transceiver und/oder ein Transceiver für eine Fahrzeug-zu-Fahrzeug-Kommunikation (gemäß dem Car-2-X-Standard) vorgesehen sein. Als Transceiver kann des Weiteren ein Empfänger für SDR (Software Defined Radio), beispielsweise DAB (Digital Audio Broadcast), ein Videoempfänger beispielsweise für DVB-T (Digital Video Broadcasting-Terrestrial) und/oder ein Empfänger für ein FM-Radiosignal oder AM-Radiosignal.

Zu der Erfindung gehören auch optionale Weiterbildungen, durch deren Merkmale sich zusätzliche Vorteile ergeben.

Eine Weiterbildung betrifft eine vorteilhafte Ausgestaltung des Sicherheitskriteriums. Gemäß dieser Weiterbildung umfasst das Sicherheitskriterium, dass die Steuerinstruktion mit einem vorbestimmten kryptografischen Schlüssel verschlüsselt ist. Mit anderen Worten wird die Steuerinstruktion nur an den zumindest einen Busanschluss weitergeleitet, falls sich anhand des verwendeten kryptografischen Schlüssels erkannt wird, dass die Steuerinstruktion von einer vorbestimmten oder autorisierten Quelle stammt. Zusätzlich oder alternativ dazu kann das Sicherheitskriterium umfassen, dass die Steuerinstruktion von einem zuvor registrierten Sender erzeugt worden sein muss. Mit anderen Worten kann auch unabhängig von einer Verschlüsselung anhand beispielsweise der Absenderadresse überprüft werden, ob die Steuerinstruktion zulässig ist. Zusätzlich oder alternativ dazu kann das Sicherheitskriterium umfassen, dass die Steuerinstruktion ausschließlich zumindest einen Steuerbefehl aus einer vorbestimmten Menge von zulässigen Steuerbefehlen enthält. Hierdurch wird die Menge der Steuerbefehle vorgegeben, welche überhaupt nur in dem zumindest einen Kommunikationsbus übertragen werden. Zusätzlich oder alternativ dazu kann vorgesehen sein, dass das Sicherheitskriterium umfasst, dass die Steuerinstruktion an einen vorbestimmten Busteilnehmer adressiert worden ist. Mit anderen Worten kann nicht jeder beliebige Busteilnehmer von außerhalb des Kraftfahrzeugs über das Dachantennenmodul adressiert oder angesteuert werden.

Eine Weiterbildung sieht vor, dass in das Dachantennenmodul ein SIM-Element (SIM - Subscriber Identity Module) zum benutzerunabhängigen Bereitstellen einer Kommunikationsverbindung zu einem Mobilfunknetz integriert ist. Mit benutzerunabhängig ist hierbei gemeint, dass das SIM-Element fest im Dachantennenmodul eingebaut ist und unabhängig von einem Benutzervertrag des Benutzers mit der Telefongesellschaft des Mobilfunknetzes betrieben wird. Die Kommunikationssteuereinheit ist dazu eingerichtet, über die Kommunikationsverbindung von außerhalb des Kraftfahrzeugs gesteuert zu werden. Hierdurch ergibt sich der Vorteil, dass beispielsweise das Sicherheitskriterium von außerhalb des Kraftfahrzeugs, beispielsweise durch einen Hersteller des Kraftfahrzeugs, eingestellt oder verbessert oder angepasst werden kann. Zusätzlich ist es möglich, über das Dachantennenmodul eine Fernwartung des Kraftfahrzeugs durchzuführen, beispielsweise Betriebssoftware für die Kommunikationssteuereinheit oder für einen anderen Busteilnehmer des zumindest einen Kommunikationsbusses des Kraftfahrzeugs in das Kraftfahrzeug zu übertragen und ein Update durchzuführen.

Eine Weiterbildung löst das Problem, dass durch die Kopplung des zumindest einen Transceivers mit dem zumindest einen Kommunikationsbus über die Kommunikationssteuereinheit die Übertragung von Kommunikationsnachrichten eines Busteilnehmers zu einer fahrzeugexternen Einheit durch die Kommunikationsnachrichten eines anderen Busteilnehmers zu einer anderen fahrzeugexternen Einheit beeinträchtigt oder blockiert oder in ihrer Übertragungsbandbreite oder Datenrate verringert wird. Dies kann dazu führen, dass das Aussenden oder Empfangen von Kommunikationsnachrichten, die für den Betrieb des Kraftfahrzeugs essentiell sind, verzögert oder blockiert wird, weil Kommunikationsnachrichten beispielsweise für den Musikempfang oder andere Unterhaltungsmedien die zur Verfügung stehende Bandbreite ausschöpfen. Die Weiterbildung sieht deshalb vor, dass das Dachantennenmodul einen Datenspeicher aufweist und die Kommunikationssteuereinheit dazu eingerichtet ist, von den zwischen dem zumindest einen Transceiver einerseits und dem zumindest einen Busanschluss andererseits zu übertragende Kommunikationsdaten zumindest einige in dem Datenspeicher zu puffern und/oder gemäß einer vorbestimmten Prioritätsregel zu übertragen. Hierdurch ergibt sich der Vorteil, dass Kommunikationsnachrichten "zwischengeparkt", also in dem Datenspeicher zwischengespeichert werden können, um andere Kommunikationsnachrichten bevorzugt zwischen einem Transceiver und einem Busanschluss zu übertragen. Durch die Prioritätsregel kann hierbei die Auswahl der zu bevorzugenden Kommunikationsnachrichten eingestellt werden.

Eine Weiterbildung löst das Problem, dass Kommunikationsnachrichten in unterschiedlichen Kommunikationsbussen gemäß einem jeweils anderen Kommunikationsstandard übertragen werden und diese Kommunikationsnachrichten aber dann für eine Übertragung über einen Transceiver gemäß einem Kommunikationsstandard für die entsprechende Funkschnittstelle angepasst werden müssen. Bei dieser Weiterbildung ist vorgesehen, dass die Kommunikationssteuereinheit eine Gatewayeinrichtung aufweist, welche dazu eingerichtet ist, ein Format zumindest einiger der zwischen dem zumindest einen Transceiver einerseits und dem zumindest einen Busanschluss andererseits zu übertragenden Kommunikationsnachrichten an einen vorbestimmten Kommunikationsstandard anzupassen. Die Gatewayeinrichtung kann hierzu wieder beispielsweise als ein Programmmodul der Kommunikationssteuereinheit ausgestaltet sein. Die Gatewayeinrichtung kann zusätzlich auch dazu ausgelegt sein, Kommunikationsnachrichten zwischen zwei Busanschlüssen auszutauschen und hierbei ebenfalls den Kommunikationsstandard anzupassen. Die Gatewayeinrichtung kann hierzu entsprechende Kommunikations-Stacks für den jeweiligen Kommunikationsbus und/oder die Kommunikation über den jeweiligen Transceiver aufweisen. Beispielsweise kann es durch die Gatewayeinrichtung ermöglicht sein, Kommunikationsnachrichten gemäß dem CAN-Standard (also CAN-Nachrichten) und dieselben Kommunikationsnachrichten gemäß dem Ethernet-Standard (also Ethernet-Datenpakete) ineinander zu überführen oder ineinander umzuwandeln.

Gemäß einer Weiterbildung ist vorgesehen, dass das Dachantennenmodul als einstückiges Bauteil ausgestaltet ist. Mit anderen Worten sind die beschriebenen Komponenten des Dachantennenmoduls in einem einzelnen Gehäuse angeordnet. Hierdurch lässt sich das Dachantennenmodul mit wenigen Montagegriffen in dem Kraftfahrzeug anordnen oder befestigen.

Ein Nachteil bei einem kompakten Dachantennenmodul kann sein, dass es von seinem Verbauort aus nicht in jede Richtung ein Funksignal günstig abstrahlen kann. Eine Weiterbildung hierzu sieht vor, dass zumindest eine Antennenanschlusseinrichtung zum jeweiligen Anschließen einer modulexternen Zusatzantenne bereitgestellt ist, wobei die zumindest einen Antennenanschlusseinrichtung jeweils direkt mit dem zumindest einen Transceiver oder mit der Kommunikationssteuereinheit verschaltet ist. Durch die Antennenanschlusseinrichtung ergibt sich der Vorteil, dass beispielsweise eine Zusatzantenne für ein Diversity-Sendeverfahren und/oder Empfangsverfahren realisiert werden kann. Ein weiterer Vorteil ist, dass die Zusatzantenne beispielsweise bei einem gekrümmten Fahrzeugdach mittels der Zusatzantenne auch einen durch die Krümmung abgeschirmten Bereich mit einem Sendesignal zu versorgen oder aus diesem Bereich ein Empfangssignal zu empfangen.

Eine Weiterbildung betrifft die Ausführungsform des Dachantennenmoduls, bei welcher zumindest eine Empfängereinrichtung für ein Positionssignal eines globalen Navigationssatellitensystems (GNSS) bereitgestellt ist. Beispielsweise kann also als Empfängereinrichtung ein GPS-Empfänger vorgesehen sein. Bei dieser Weiterbildung weist die Kommunikationssteuereinheit eine Extrapolationseinrichtung auf, die dazu eingerichtet ist, bei Fehlen des Positionssignals eine Fahrzeugposition dennoch auf der Grundlage von über den zumindest einen Busanschluss aus dem jeweiligen Kommunikationsbus des Kraftfahrzeugs empfangenen Betriebsdaten des Kraftfahrzeugs zu ermitteln und an dem zumindest einen Busanschluss bereitzustellen. Die Extrapolationseinrichtung kann beispielsweise wieder als ein Programmmodul der Kommunikationssteuereinheit realisiert sein. Mit ihr lässt sich in vorteilhafter Weise auch für den Fall, dass gerade die Satellitensignale des GNSS nicht empfangen werden können, die Fahrzeugposition dennoch ermitteln. Hierzu können beispielsweise als Betriebsdaten Odometriedaten des Kraftfahrzeugs genutzt werden, also beispielsweise die Raddrehzahl und/oder Lenkradstellung.

Eine Weiterbildung verhindert eine zu hohe Fehlalarmrate beim Zurückweisen von Steuerinstruktionen. Hierzu wird der Funkübertragungsweg zuverlässiger gegen Störungen abgesichert. Dies erfolgt bei der Weiterbildung, indem die Kommunikationssteuereinheit und/oder der zumindest eine Transceiver dazu eingerichtet ist, eine Fehlercodierung und/oder ein Sendeverfahren und/oder ein Empfangsverfahren für die Kommunikationsnachrichten in Abhängigkeit von einem eine Umgebung des Kraftfahrzeugs beschreibendes Umgebungssignal einzustellen. Als Fehlercodierung kann beispielsweise eine Kanalcodierung eingestellt werden. Sendeverfahren und/oder Empfangsverfahren stellen beispielsweise die Nutzung einer einzelnen Antenne oder zweier Antennen ein. Ein typisches Mehrantennenverfahren ist ein MIMO-Verfahren (MIMO - Multiple Input Multiple Output). Als Umgebungssignal kann beispielsweise ein Signal-zu-Rausch-Verhältnis ermittelt werden. Ein weiteres Umgebungssignal kann beispielsweise eine Positionsangabe sein, die angibt, ob sich das Kraftfahrzeug unter freiem Himmel oder beispielsweise in einem Tunnel oder in einem Parkhaus befindet. Ein weiteres Umgebungssignal kann eine relative Lage oder eine Richtung einer nächstgelegenen fahrzeugexternen Sende- und Empfangseinrichtung sein, wie sie beispielsweise in einem Parkhaus oder in einem Tunnel als WLAN-Router realisiert sein kann. Durch diese Weiterbildung werden also eine adaptive Codierung sowie ein richtungsabhängiger Empfang für den zumindest einen Transceiver in Abhängigkeit von dem Umgebungssignal eingestellt.

Bei einer Weiterbildung ist vorgesehen, dass die Kommunikationssteuereinheit eine Diagnoseeinrichtung aufweist. Diese kann ebenfalls wieder als Programmmodul für die Kommunikationssteuereinheit realisiert sein. Die Diagnoseeinrichtung ist dazu eingerichtet, über den zumindest einen Busanschluss und/oder über den zumindest einen Transceiver jeweils Diagnosedaten auszusenden. Die Diagnosedaten beschreiben einen aktuellen Betriebszustand des Dachantennenmoduls und/oder während eines Betriebs des Dachantennenmoduls erkannte Fehler. Indem die Diagnosedaten über den zumindest einen Busanschluss im Kraftfahrzeug bereitgestellt werden, ist bei einer Selbstdiagnose oder einer Diagnose mittels eines Diagnosegeräts in dem Kraftfahrzeug ermittelbar, ob das Dachantennenmodul einwandfrei funktioniert. Das Bereitstellen der Diagnosedaten über den zumindest einen Transceiver weist den zusätzlichen Vorteil auf, dass eine Ferndiagnose möglich ist.

Eine Weiterbildung sieht vor, dass ein Netzteil des Dachantennenmoduls über eine Aufweckleitung mit dem zumindest einen Transceiver verschaltet ist und dazu eingerichtet ist, bei ausgeschalteter Kommunikationssteuereinheit über den zumindest einen Transceiver ein Aufwecksignal zu empfangen und die Kommunikationssteuereinheit bei Empfangen des Aufwecksignals einzuschalten.

Für den Fall, dass mehrere Transceiver vorgesehen sind, sind bevorzugt für diese getrennte Signalpfade zwischen jedem Transceiver und der Kommunikationssteuereinheit vorgesehen. Hierdurch wird ein sogenanntes Übersprechen, also die gegenseitige Beeinflussung der Transceiversignale, vermindert.

Ein weiterer Vorteil ergibt sich durch einen modularen Aufbau des Transceiverteils, durch welchen ermöglicht ist, dass das Dachantennenmodul mit einem oder mehreren Transceivern wahlweise bestückt werden kann und hierbei die Transceiver unabhängig voneinander bereitgestellt werden können.

Wie bereits ausgeführt, gehört zu der Erfindung auch ein Kraftfahrzeug mit zumindest einem digitalen Kommunikationsbus und mit einem an dem zumindest einen Kommunikationsbus angeschlossenen Dachantennenmodul, das eine Ausführungsform des erfindungsgemäßen Dachantennenmoduls darstellt. Das Kraftfahrzeug ist bevorzugt als Kraftwagen, insbesondere als Personenkraftwagen, ausgestaltet.

Schließlich gehört zu der Erfindung auch das bereits genannte Verfahren zum Betreiben des Dachantennenmoduls. Durch die Kommunikationssteuereinheit wird hierbei der zumindest eine Transceiver mit dem zumindest einen Busanschluss gekoppelt und es werden Kommunikationsnachrichten zwischen dem zumindest einen Transceiver einerseits und dem zumindest einen Busanschluss andererseits übertragen. Die besagte Filtereinrichtung leitet eine über den zumindest einen Transceiver per Funk von außerhalb des Kraftfahrzeugs empfangene und an einen Busteilnehmer eines über den zumindest einen Busanschluss angeschlossenen Kommunikationsbusses adressierte Steuerinstruktion an den zumindest einen Busanschluss nur weiter, falls die Steuerinstruktion ein vorbestimmtes Sicherheitskriterium erfüllt.

Das Sicherheitskriterium kann eine der bereits beschriebenen Bedingungen umfassen.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Dachantennenmoduls beschrieben worden sind. Aus diesem Grund unterbleibt hier eine Beschreibung der entsprechenden Weiterbildungen des erfindungsgemäßen Verfahrens.

Im Folgenden ist ein Ausführungsbeispiel der Erfindung beschrieben. Hierzu zeigt:
- Fig. 1: eine schematische Darstellung einer Ausführungsform des erfindungsgemäßen Dachantennenmoduls in einer Seitenansicht; und
- Fig. 2: eine schematische Darstellung eines Schaltplans des Dachantennenmoduls von Fig. 1.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

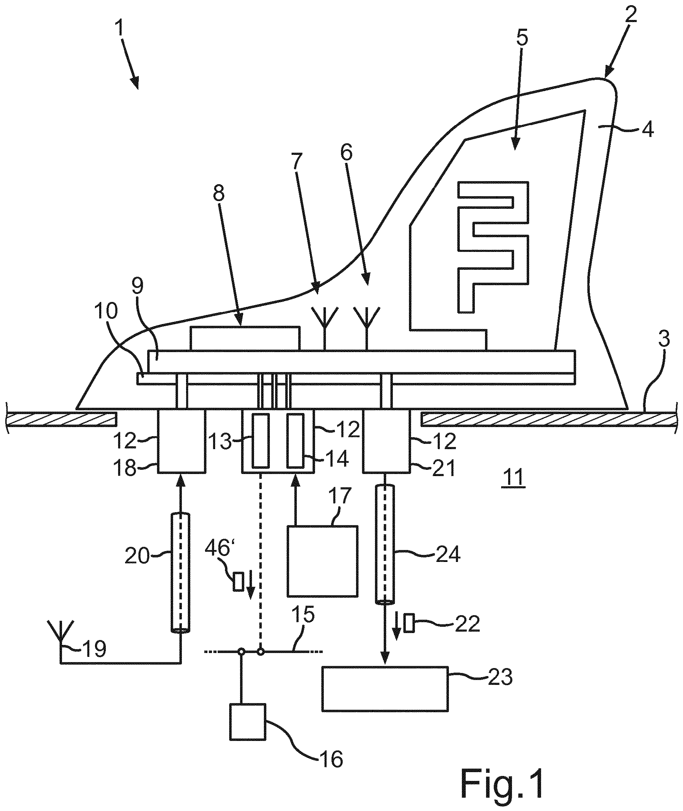

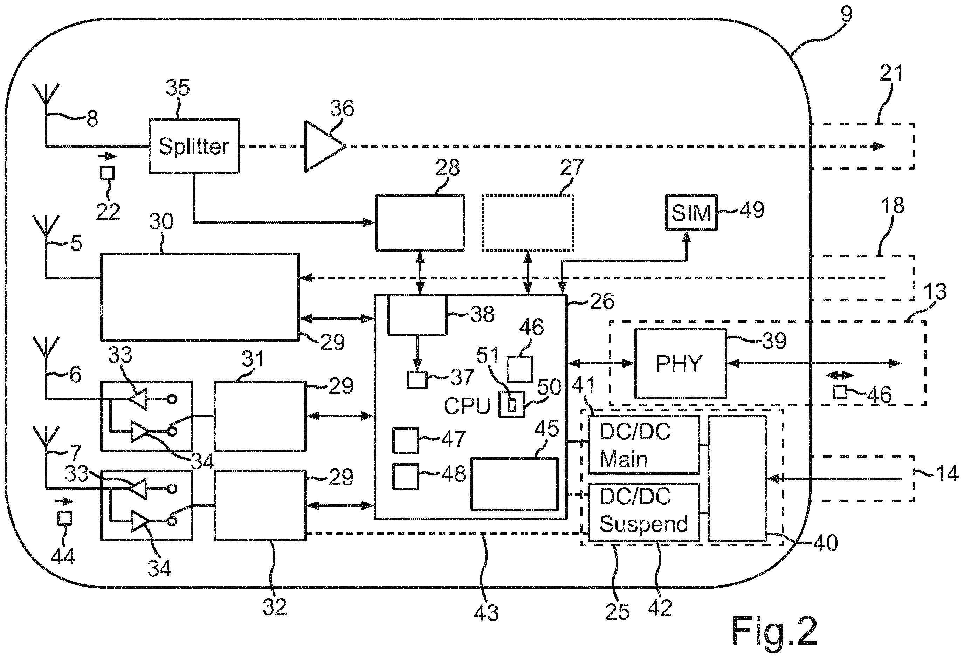

Fig. 1 zeigt von einem Kraftfahrzeug 1 ein Dachantennenmodul 2, das auf einem Fahrzeugdach 3 montiert sein kann. In einem Gehäuse 4 des Dachantennenmoduls können eine Mobilfunkantenne 5, zwei Nahbereichsantennen 6, 7 und eine GNSS-Empfangsantenne 8 angeordnet sein. Das Gehäuse 4 kann die Form einer Finne aufweisen. Die Antennen 5 bis 8 können beispielsweise auf einer Leiterplatte 9 angeordnet sein. Ein prinzipieller Schaltplan der Leiterplatte 9 ist in Fig. 2 veranschaulicht.

Die Leiterplatte 9 kann eine Schirmung 10 aufweisen, durch welche ein Abstrahlen von Antennensignalen der Antennen 5 bis 8 in einen Fahrzeuginnenraum 11 verhindert werden kann. Die Leiterplatte 9 kann über Anschlussstecker oder Buchsen 12 mit dem übrigen Kraftfahrzeug 1 verschaltet sein. Es kann eine Anschlussbuchse 12 mit einem Busanschluss 13 sowie einem Versorgungsanschluss 14 für eine Spannungsversorgung vorgesehen sein. Über den Busanschluss 13 kann das Dachantennenmodul 2 mit einem Kommunikationsbus 15 des Kraftfahrzeugs verbunden sein. Der Kommunikationsbus 15 kann beispielsweise ein CAN-Bus oder ein anderer der genannte Bustypen sein. An dem Kommunikationsbus 15 können weitere Busteilnehmer 16 angeschlossen sein, die in Fig. 1 nur durch ein einzelnes Element repräsentiert sind. Über den Versorgungsanschluss 14 kann das Dachantennenmodul 2 beispielsweise mit einem elektrischen Bordnetz 17 des Kraftfahrzeugs 1 verbunden sein. Bei dem elektrischen Bordnetz 17 kann es sich beispielsweise um ein 12 Volt-Bordnetz handeln.

Ein weiterer Anschlussstecker oder eine weitere Anschlussbuchse 12 kann beispielsweise als Antennenanschlusseinrichtung 18 ausgestaltet sein, über welche eine Zusatzantenne 19 angeschlossen sein kann. Die Verbindung zwischen der Zusatzantenne 19 und der Antennenanschlusseinrichtung 18 kann über eine Koaxialleitung 20 erfolgen. Ein weiterer Anschlussstecker oder eine weitere Anschlussbuchse 12 kann ein GNSS-Anschluss 21 sein, über welchen ein von der GNSS-Antenne 8 empfangenes Positionssignal 22 an ein Infotainmentsystem (Informations-Unterhaltungssystem) oder Navigationsgerät 23 weitergeleitet werden kann. Auch diese Verbindung kann über eine Koaxialleitung 24 bereitgestellt sein.

Fig. 2 veranschaulicht, wie in dem Dachantennenmodul 2 ein Netzteil 25, eine Kommunikationssteuereinheit 26, ein Datenspeicher 27, eine GNSS-Empfängereinrichtung 28 und für jeweils eine der Antennen 5 bis 7 ein Transceiver 29 bereitgestellt sein kann. Einer der Transceiver 29 kann ein Mobilfunk-Modem 30, ein weiterer Transceiver 29 ein WLAN-Modul 31 und ein weiterer Transceiver 29 ein Bluetooth-Modul 32 sein. Die Module 31, 32 können für einen Sendebetrieb über einen Leistungsverstärker (PA - Power Amplifier) 33 und für einen Empfangsbetrieb über einen rauscharmen Verstärker (LNA - Low Noise Amplifier) 34 mit der jeweiligen Antenne 6, 7 abwechselnd verschaltet werden. Die GNSS-Empfangseinrichtung 28 kann über einen Splitter 35 mit der GNSS-Antenne 8 gekoppelt sein. Mittels des Splitters 35 ist es ermöglicht, das Positionssignal 22 sowohl an der GNSS-Empfangseinrichtung 28 als auch dem optionalen GNSS-Ausgang 21 bereitzustellen. Hierbei kann eine Verstärkung über einen rauscharmen Verstärker LNA 36 vorgesehen sein. Für eine Extrapolation einer Fahrzeugposition 37 kann eine Extrapolationseinrichtung 38 vorgesehen sein, welche bei fehlendem Positionssignal 22 weiterhin die Fahrzeugposition 37 auf der Grundlage von Betriebsdaten des Kraftfahrzeugs 1 ermittelt, die über den Busanschluss 13 empfangen werden können.

Der Busanschluss 13 ist in Fig. 2 mit seiner sogenannten physikalischen Schicht 39 (PHY) des ISO-OSI-Empfangsmodells dargestellt.

Das Netzteil 25 kann eine Schutzschaltung und/oder Filterschaltung 40 aufweisen, um Störungen aus dem Bordnetz 17 zu blockieren. Des Weiteren kann eine Gleichspannungsversorgung 41 (DC/DC-Main) für die Leiterplatte 9 vorgesehen sein. Des Weiteren kann eine Aufweckschaltung 42 (DC/DC-Suspend) bereitgestellt sein, die über eine Aufweckleitung 43 bespielsweise mit dem Bluetooth-Modul 32 gekoppelt sein kann, um das Dachantennenmodul 2 über ein fahrzeugexternes Aufwecksignal 44 einschalten zu können. Dies kann zum funkbasierten Entriegeln des Kraftfahrzeugs 1 genutzt werden.

Die Kommunikationssteuereinheit 26 kann beispielsweise auf der Grundlage eines Mikroprozessors oder Mikrocontrollers realisiert sein (CPU - Central Processing Unit). Eine Betriebssoftware 45 kann in einem Flash-Speicher gespeichert sein. Der Datenspeicher 27 kann dagegen ein flüchtiger Datenspeicher (RAM - Random Access Memory) sein.

Durch das Dachantennenmodul 2 ist insgesamt eine funkbasierte Kommunikation zwischen dem Kraftfahrzeug 1 und fahrzeugexternen Einheiten, beispielsweise einem Smartphone, einem Heimnetzwerk, einem öffentlichen Mobilfunknetz oder auch mit anderen Kraftfahrzeugen möglich, indem entsprechende Transceiver-Hardware inklusive der notwendigen Antennen und die dafür nötigen Softwaremodule für die Kommunikationssteuereinheit 26 komplett in dem Dachantennenmodul 2 integriert sind. Durch das Bereitstellen der Kommunikationssteuereinheit 26 mit dem Busanschluss 13 verhält sich das Dachantennenmodul 2 im Kraftfahrzeug wie ein eigenständiges Kommunikations-Steuergerät mit direktem Anschluss an die Fahrzeug-Bus-Vernetzung. Über eine Gatewayeinrichtung 46 kann zwischen funkbasierten Standard-Kommunikationsdiensten und der fahrzeugeigenen Vernetzungsarchitektur des Kommunikationsbusses 15 ein Austausch von Kommunikationsnachrichten 47 ermöglicht werden. Wesentliches Merkmal des Dachantennenmoduls 2 ist die vollständige Integration aller Kommunikations-Funk-Transceiverbausteine inklusive aller notwendigen Mikrocontroller und Fahrzeug-Bus-Anschlusselektronik (beispielsweise CAN und/oder FlexRay und/oder Ethernet) direkt und zentral in dem Dachantennenmodul 2 sowie die damit ermöglichte direkte Umwandlung der Funksignale und der Kommunikations-Digitalfunksignale in für die Fahrzeugvernetzung des Kommunikationsbusses 15 notwendigen Bussignale und Botschaften ohne zusätzliche Hochfrequenzleitungen oder Koaxialleitungen und ohne zwischengeschaltete weitere Steuergeräte im Fahrzeuginnenraum 11. In diesem intelligenten Dachantennenmodul 2 können somit entsprechende Softwareprozesse die unterschiedlichen Funk-Dienste aggregieren und auch gemäß einer Priorisierungsregel 47 priorisieren und zentral verarbeiten. Die einzelnen Transceiver 29 können als Bestückungsoption vorgehalten werden und somit ein modulares Konzept für unterschiedliche Aufbaustufen realisiert werden, was bei der Herstellung von Dachantennenmodulen 2 in der Massenfertigung einen Kostenvorteil ergibt.

Die Bestückungsoption ist dadurch frei skalierbar und benötigt nur den jeweils gewünschten Transceiver-Halbleiterchip zur Realisierung der entsprechenden Funkschnittstelle. Durch die Kommunikationssteuereinheit 26 ergibt sich eine zentrale Verarbeitung der Kommunikationsnachrichten 26 in einer Applikationslogik und Steuerung. Durch entsprechendes Software-Scheduling der einzelnen Programmmodule oder Tasks lassen sich parallel mehrere Funktionalitäten durch die Kommunikationssteuereinheit 26 realisieren. So kann die beschriebene Priorisierung gemäß der Priorisierungsregel 27 und das Scheduling und die Pufferung der Daten mittels des Datenspeichers 27 realisiert werden. Zwischen den Antennen 5 bis 7 sowie mittels der Zusatzantenne 19 kann eine Transmit-Diversity ermöglicht werden. Die Anschlusseinrichtung 18 ist hierbei optional vorgesehen, um die abgesetzte zweite Zusatzantenne 18 beispielsweise bei einem stark gekrümmten Fahrzeugdach 3 bereitstellen zu können. Beim Senden und Empfangen kann eine adaptive Codierung der Signale vorgesehen sein. Mittels einer Diagnoseeinrichtung 48 kann eine zentrale Diagnose vorgesehen sein, wobei unterschiedliche Betriebszustände in Diagnoseklassen eingeteilt werden können.

Die Kommunikationssteuereinheit 26 kann hierbei wegen ihres Anschlusses an den Kommunikationsbus 15 auch für die Diagnose anderer Steuergeräte genutzt werden. Über eine Funkverbindung kann auch ein zentraler Software-Flash-Prozess für ein Update der Betriebssoftware 25 ermöglicht werden. Durch die kompakte Anordnung aller Komponenten auf der Leiterplatte 9 oder auch mehrerer in dem Gehäuse 4 angeordneten Leiterplatten ist eine Minimierung der Verkopplung der unterschiedlichen Funk-Dienste untereinander durch optimiertes und auf maximaler Skalierungsstufe angepasstes Antennen-, EMV- (elektromagnetische Verträglichkeit), Schirmungs- und PCD-Layout-Konzept ermöglicht (PCD - Printed Circuit Board). Dadurch ist eine Interoperabilität aller Funkdienste sichergestellt. Eine Skalierbarkeit kann auch hinsichtlich der verwendeten Kommunikationssteuereinheit je nach notwendiger geforderter Ressource der Applikationen erfolgen. Durch die Kopplung mit sämtlichen Transceivern 29 und dem Kommunikationsbus 15 ist durch die Kommunikationssteuereinheit 26 ein Daten-Multiplex aller Funk-Dienste und die Verteilung über den digitalen Kommunikationsbus 15 (CAN, FlexRay, MOST, Ethernet) an alle angeschlossenen Datensenken, das heißt die Busteilnehmer 16 (beispielsweise Navigation, Infotainment-Zentralrechner, eCall, Telematik-, Fahrzeugtracking, Telefonie) möglich. Optional kann auch in dem Dachantennenmodul 2 ein Radioempfang ermöglicht werden durch die Integration von SDR (Software Defined Radio), um klassische Broadcast-Empfangsdienste wie DAB, DVB-T, FM-Radio) ebenfalls über das Dachantennenmodul 2 nutzen zu können. Optional ist die Integration einer Embedded SIM 49 oder einer konfigurierbaren eUICC-SIM. Alterantiv dazu kann eine externe SIM-Leseeinrichtung mit entsprechender Umschaltelogik vorgesehen sein. Über eine solche externe SIM-Leseeinrichtung kann dann über eine benutzereigene SIM-Karte über das zentrale Dachantennenmodul 2 telefoniert werden.

Konkret sind die folgenden Transceiver bevorzugt vorgesehen: IEEE802.11a/b/g/n/p/ac-fähiger WLAN-Transceiver, Bluetooth-Transceiver, Mobilfunkmodem (LTE, LTE-Proximityservices, wie LTE direct und M2M-Kommunikation (M2M - Machine to Machine)), eine CPU für die Applikation und Administration, ein Datenspeicher sowie ein Flash-Speicher, die Anbindung an den Kommunikationsbus 15, die beschriebenen Antennen für GNSS, WLAN (bevorzugt inklusive 5,9 GHz und Car2X-Standard), Bluetooth und Mobilfunk.

Weitere vorteilhafte Komponenten sind ein Funkfrequenz-Frontend zur Entkopplung und Interoperabilität, wie sie durch den beschriebenen Verstärker 33, 34 bereitgestellt werden können, ein Funkfrequenz-Combiner und Funkfrequenz-Switch (Funkfrequenz-RF-Radio Frequency), der GNSS-Empfänger, Kommunikations-Stacks zum Übertragen der Kommunikationsnachrichten 46 innerhalb der Kommunikationssteuereinheit 26, entsprechende Anwendungssoftware zum Steuern der Kommunikation und die beschriebene Extrapolationseinrichtung 48.

Um hierbei zu verhindern, dass in den Kommunikationsbus 15 als eine der Kommunikationsnachrichten 46 eine unerwünschte Steuerinstruktion 46' an einen der Busteilnehmer 16 per Funk übertragen wird, ist insbesondere eine Filtereinrichtung 50 vorgesehen, welche eine Firewall-Funktionalität und ein Kryptografie-Modul umfassen kann. Hierdurch ist die Kommunikation innerhalb des Kommunikationsbusses 15 von der Kommunikation über die Funkschnittstelle der Transceiver 29 entkoppelt. Eine Kommunikationsnachricht 46 kann also beispielsweise eine Steuerinstruktion 46' enthalten. Anders herum gibt es auch Kommunikationsnachrichten, die nicht zwingend Steuerinstruktionen 46' sind, sondern beispielsweise Statusmeldungen oder Statusnachrichten. Durch die Filtereinrichtung 50 werden nur solche Steuerinstruktionen 46' und bevorzugt auch andere Kommunikationsnachrichten 46 in den Kommunikationsbus 15 weitergeleitet, die als sicher eingestuft werden, wobei hierzu ein entsprechendes Sicherheitskriterium 51 für die Filtereinrichtung 50 hinterlegt oder bereitgestellt ist. Zusätzlich kann vorgesehen sein, dass auch Informationen aus dem Kommunikationsbus 15 an die Funkschnittstelle der Transceiver 29 nur dann weitergeleitet werden, wenn es sich um Informationen (z.B. vom Kraftfahrzeug 1 ausgesendete Steuerinstruktionen oder Statusmeldungen) handelt, die auch tatsächlich das Kraftfahrzeug 1 verlassen dürfen. Hierzu kann das Sicherheitskriterium 51 entsprechend weiter ausgestaltet sein.

Insgesamt zeigt das Beispiel, wie durch die Erfindung ein Transceiver mit Steuergerät in einer Dachantenne bereitgestellt werden kann.

## Patentansprüche

1. Dachantennenmodul (2) zum Anordnen auf einem Dach (3) eines Kraftfahrzeugs (1), aufweisend:
- zumindest einem Transceiver (29) mit einer jeweiligen Antenne (5-7),
- zumindest einen Busanschluss (13) zum Anschließen des Dachantennenmoduls (2) an einen jeweiligen digitalen Kommunikationsbus (15) des Kraftfahrzeugs (1),
- eine Kommunikationssteuereinheit (26), über welche der zumindest eine Transceiver (29) mit dem zumindest einen Busanschluss (13) gekoppelt ist und welche dazu eingerichtet ist, Kommunikationsnachrichten (46) zwischen dem zumindest einen Transceiver (29) einerseits und dem zumindest einen Busanschluss (13) andererseits zu übertragen,
**dadurch gekennzeichnet, dass**
die Kommunikationssteuereinheit (26) eine Filtereinrichtung (50) aufweist, die dazu eingerichtet ist, eine über den zumindest einen Transceiver (29) per Funk von außerhalb des Kraftfahrzeugs (1) empfangene und an einen Busteilnehmer (16) des zumindest einen Kommunikationsbusses (15) adressierte, in den Kommunikationsnachrichten (46) enthaltene Steuerinstruktion (46') an den zumindest einen Busanschluss (13) nur weiterzuleiten, falls die Steuerinstruktion (29) ein vorbestimmtes Sicherheitskriterium (51) erfüllt.

2. Dachantennenmodul (2) nach Anspruch 1, wobei das Sicherheitskriterium (51) umfasst, dass die Steuerinstruktion (46') mit einem vorbestimmten kryptographischen Schlüssel verschlüsselt ist und/oder von einem zuvor registrierten Sender erzeugt worden ist und/oder an einem vorbestimmten Busteilnehmer (16) adressiert worden ist und/oder die Steuerinstruktion (46') ausschließlich zumindest einen Steuerbefehl aus einer vorbestimmten Menge von zulässigen Steuerbefehlen enthält.

3. Dachantennenmodul (2) nach einem der vorhergehenden Ansprüche, wobei ein SIM-Element (49) zum benutzerunabhängigen Bereitstellen einer Kommunikationsverbindung zu einem Mobilfunknetz in das Dachantennenmodul (2) integriert ist und die Kommunikationssteuereinheit (26) dazu eingerichtet ist, über die Kommunikationsverbindung von außerhalb des Kraftfahrzeugs (1) gesteuert zu werden.

4. Dachantennenmodul (2) nach einem der vorhergehenden Ansprüche, wobei das Dachantennenmodul (2) einen Datenspeicher (27) aufweist und die Kommunikationssteuereinheit (26) dazu eingerichtet ist, von den zwischen dem zumindest einen Transceiver (29) einerseits und dem zumindest einen Busanschluss (13) andererseits zu übertragenden Kommunikationsnachrichten (46) zumindest einige in dem Datenspeicher (27) zu Puffern und/oder gemäß einer vorbestimmten Prioritätsregel (47) zu übertragen.

5. Dachantennenmodul (2) nach einem der vorhergehenden Ansprüche, wobei die Kommunikationssteuereinheit (26) eine Gatewayeinrichtung aufweist, welche dazu eingerichtet ist, ein Format zumindest einiger der zwischen dem zumindest einen Transceiver (29) einerseits und dem zumindest einen Busanschluss (13) andererseits zu übertragenden Kommunikationsnachrichten (46) an einen vorbestimmten Kommunikationsstandard anzupassen.

6. Dachantennenmodul (2) nach einem der vorhergehenden Ansprüche, wobei das Dachantennenmodul (2) als einstückiges Bauteil ausgestaltet ist.

7. Dachantennenmodul (2) nach einem der vorhergehenden Ansprüche, wobei zumindest eine Antennenanschlusseinrichtung (18) zum jeweilige Anschließen einer modulexternen Zusatzantenne (18) bereitgestellt ist, wobei die zumindest eine Antennenanschlusseinrichtung (18) jeweils direkt mit dem zumindest einen Transceiver (29) oder mit der Kommunikationssteuereinheit (26) verschaltet ist.

8. Dachantennenmodul (2) nach einem der vorhergehenden Ansprüche, wobei zumindest eine Empfängereinrichtung (28) für ein Positionssignal (2) eines globales Navigationssatellitensystem, GNSS, bereitgestellt ist und die Kommunikationssteuereinheit (26) eine Extrapolationseinrichtung (38) aufweist, die dazu eingerichtet ist, bei Fehlen des Positionssignals (22) eine Fahrzeugposition (37) auf der Grundlage von über den zumindest einen Busanschluss (13) aus dem jeweiligen Kommunikationsbus (15) empfangenen Betriebsdaten des Kraftfahrzeugs (1) zu ermitteln und an dem zumindest einen Busanschluss (13) bereitzustellen.

9. Dachantennenmodul (2) nach einem der vorhergehenden Ansprüche, wobei die Kommunikationssteuereinheit (26) und/oder der zumindest eine Transceiver (29) dazu eingerichtet ist, eine Fehlercodierung und/oder ein Sendeverfahren und/oder Empfangsverfahren für die Kommunikationsnachrichten (46) in Abhängigkeit von einem eine Umgebung des Kraftfahrzeugs (1) beschreibendes Umgebungssignal einzustellen.

10. Dachantennenmodul (2) nach einem der vorhergehenden Ansprüche, wobei die Kommunikationssteuereinheit (26) eine Diagnoseeinrichtung (48) aufweist, die dazu eingerichtet ist, über den zumindest eine Busanschluss (13) und/oder über den zumindest einen Transceiver (29) jeweils Diagnosedaten, welche einen aktuellen Betriebszustand des Dachantennenmoduls (2) und/oder während eines Betriebs des Dachantennenmoduls (2) erkannte Fehler beschreiben, auszusenden.

11. Dachantennenmodul (2) nach einem der vorhergehenden Ansprüche, wobei ein Netzteil (25) des Dachantennenmoduls (2) über eine Aufweckleitung (43) mit dem zumindest einen Transceiver (29) verschaltet ist und dazu eingerichtet ist, bei ausgeschalteter Kommunikationssteuereinheit (26) über den zumindest einen Transceiver (29) ein Aufwecksignal (44) zu empfangen und die Kommunikationssteuereinheit (26) bei Empfangen des Aufwecksignals (44) einzuschalten.

12. Kraftfahrzeug (1) mit zumindest einem digitalen Kommunikationsbus (15) und mit einem an den zumindest einen Kommunikationsbus (15) angeschlossenen Dachantennenmodul (2) nach einem der vorhergehenden Ansprüche.

13. Verfahren zum Betreiben eines Dachantennenmoduls (2) nach einem der Ansprüche 1 bis 11, wobei durch die Kommunikationssteuereinheit (26) des Dachantennenmoduls (2) zumindest ein Transceiver (29) des Dachantennenmoduls (2) mit zumindest einem Busanschluss (13) des Dachantennenmoduls (2) gekoppelt wird und Kommunikationsnachrichten (46) zwischen dem zumindest einen Transceiver (29) einerseits und dem zumindest einen Busanschluss (13) andererseits übertragen werden, **dadurch gekennzeichnet, dass**
eine Filtereinrichtung (50) der Kommunikationssteuereinheit (26) eine über den zumindest einen Transceiver (29) per Funk von außerhalb des Kraftfahrzeugs (1) empfangene und an einen Busteilnehmer (16) eines über den zumindest einen Busanschluss (13) angeschlossenen Kommunikationsbusses (15) adressierte Steuerinstruktion (46') an den zumindest einen Busanschluss (13) nur weiterleitet, falls die Steuerinstruktion (46') ein vorbestimmtes Sicherheitskriterium (51) erfüllt.

## Claims

1. Roof antenna module (2) for disposition on a roof (3) of a motor vehicle (1), having:
- at least one transceiver (29) with a respective antenna (5-7),
- at least one bus terminal (13) for connecting the roof antenna module (2) to a respective digital communication bus (15) of the motor vehicle (1),
- a communication control unit (26) via which the at least one transceiver (29) is coupled with the at least one bus terminal (13) and which is configured to transmit communication messages (46) between the at least one transceiver (29) on the one hand and the at least one bus terminal (13) on the other hand,
**characterised in that**
the communication control unit (26) has a filter device (50) which is configured to forward to the at least one bus terminal (13) a control instruction (46'), included in the communication messages (46), received via the at least one transceiver (29) by radio from outside the motor vehicle (1) and addressed to a bus user (16) of the at least one communication bus (15), only in the case that the control instruction (29) fulfils a predetermined safety criterion (51).

2. Roof antenna module (2) according to claim 1, wherein the safety criterion (51) comprises that the control instruction (46') is encoded with a predetermined cryptographic key and/or has been generated by a previously registered sender and/or has been addressed to a predetermined bus user (16) and/or the control instruction (46') contains exclusively at least one control command from a predetermined quantity of permitted control commands.

3. Roof antenna module (2) according to any of the preceding claims, wherein a SIM-element (49) for the user-independent provision of a communication connection to a mobile radio network is integrated into the roof antenna module (2) and the communication control unit (26) is configured to be controlled via the communication connection from outside the motor vehicle (1).

4. Roof antenna module (2) according to any of the preceding claims, wherein the roof antenna module (2) has a data storage (27) and the communication control unit (26) is configured to buffer in the data storage (27) at least some of the communication messages (46) to be transmitted between the at least one transceiver (29) on the one hand and the at least one bus terminal (13) on the other hand, and/or to transmit them according to a predetermined priority rule (47).

5. Roof antenna module (2) according to any of the preceding claims, wherein the communication control unit (26) has a gateway device which is configured to adapt to a predetermined communication standard a format of at least some of the communication messages (46) to be transmitted between the at least one transceiver (29) on the one hand and the at least one bus terminal (13) on the other hand.

6. Roof antenna module (2) according to any of the preceding claims, wherein the roof antenna module (2) is designed as an integral component.

7. Roof antenna module (2) according to any of the preceding claims, wherein at least one antenna connection means (18) is provided for the respective connection of an additional antenna (18) external to the module, wherein the at least one antenna connection means (18) is wired respectively directly with the at least one transceiver (29) or with the communication control unit (26).

8. Roof antenna module (2) according to any of the preceding claims, wherein at least one receiver device (28) for a position signal (2) of a global navigation satellite system, GNSS, is provided and the communication control unit (26) has an extrapolation device (38) which is configured in the absence of the position signal (22) to determine a vehicle position (37) on the basis of operational data of the motor vehicle (1) received via the at least one bus terminal (13) from the respective communication bus (15) and to provide said vehicle position at the at least one bus terminal (13).

9. Roof antenna module (2) according to any of the preceding claims, wherein the communication control unit (26) and/or the at least one transceiver (29) is configured to adjust an error coding and/a transmission method and/or reception method for the communication messages (46) depending on an environment signal describing an environment of the motor vehicle (1).

10. Roof antenna module (2) according to any of the preceding claims, wherein the communication control unit (26) has a diagnosis device (48) which is configured to send via the at least one bus terminal (13) and/or via the at least one transceiver (29) in each case diagnosis data which describe an actual operational status of the roof antenna module (2) and/or errors detected during an operation of the roof antenna module (2).

11. Roof antenna module (2) according to any of the preceding claims, wherein a power supply (25) of the roof antenna module (2) is wired via a wake-up line (43) with the at least one transceiver (29) and is configured to receive a wake-up signal (44) via the at least one transceiver (29) when the communication control unit (26) is switched off and to switch on the communication control unit (26) when the wake-up signal (44) is received.

12. Motor vehicle (1) having at least one digital communication bus (15) and having a roof antenna module (2) according to any of the preceding claims connected with the at least one communication bus (15).

13. Method for operating a roof antenna module (2) according to any of claims 1 to 11, wherein by means of the communication control unit (26) of the roof antenna module (2) at least one transceiver (29) of the roof antenna module (2) is coupled with at least one bus terminal (13) of the roof antenna module (2) and communication messages (46) are transmitted between the at least one transceiver (29) on the one hand and the at least one bus terminal (13) on the other hand,
**characterized in that**
a filter device (50) of the communication control unit (26) forwards to the at least one bus terminal (13) a control instruction (46'), received via the at least one transceiver (29) by radio from outside the motor vehicle (1) and addressed to a bus user (16) of a communication bus (15) connected via the at least one bus terminal (13), only in the case that the control instruction (46') fulfils a predetermined safety criterion (51).

## Revendications

1. Module d'antenne de toit (2) pour l'agencement sur un toit (3) d'un véhicule automobile (1), présentant :
- au moins un émetteur-récepteur (29) avec une antenne (5-7) respective,
- au moins un branchement de bus (13) pour le branchement du module d'antenne de toit (2) à un bus de communication (15) numérique respectif du véhicule automobile (1),
- une unité de commande de communication (26) par le biais de laquelle l'au moins un émetteur-récepteur (29) est couplé à l'au moins un branchement de bus (13) et qui est conçue pour transmettre des messages de communication (46) entre, d'une part, l'au moins un émetteur-récepteur (29) et, d'autre part, l'au moins un branchement de bus (13),
**caractérisé en ce que**
l'unité de commande de communication (26) présente un système de filtre (50) qui est conçu pour transférer une instruction de commande (46'), contenue dans les messages de communication (46), reçue par le biais de l'au moins un émetteur-récepteur (29) par radio depuis l'extérieur du véhicule automobile (1) et adressée à un participant au bus (16) de l'au moins un bus de communication (15), à l'au moins un branchement de bus (13) uniquement dans le cas où l'instruction de commande (29) satisfait un critère de sécurité (51) prédéterminé.

2. Module d'antenne de toit (2) selon la revendication 1, dans lequel le critère de sécurité (51) comprend le fait que l'instruction de commande (46') est chiffrée avec une clé cryptographique prédéterminée et/ou a été générée par un émetteur enregistré auparavant et/ou a été adressée à un participant au bus (16) prédéterminé et/ou l'instruction de commande (46') contient exclusivement au moins un ordre de commande parmi une quantité prédéterminée d'ordres de commande admissibles.

3. Module d'antenne de toit (2) selon l'une quelconque des revendications précédentes, dans lequel un élément SIM (49) pour la fourniture, indépendante de l'utilisateur, d'une liaison de communication à un réseau radio mobile est intégré dans le module d'antenne de toit (2), et l'unité de commande de communication (26) est conçue pour être commandée par le biais de la liaison de communication depuis l'extérieur du véhicule automobile (1).

4. Module d'antenne de toit (2) selon l'une quelconque des revendications précédentes,
dans lequel le module d'antenne de toit (2) présente une mémoire de données (27) et l'unité de commande de communication (26) est conçue pour mettre provisoirement au moins certains des messages de communication (46) à transmettre entre, d'une part, l'au moins un émetteur-récepteur (29) et, d'autre part, l'au moins un branchement de bus (13) dans la mémoire de données (27) et/ou les transmettre selon une règle de priorité prédéterminée (47).

5. Module d'antenne de toit (2) selon l'une quelconque des revendications précédentes, dans lequel l'unité de commande de communication (26) présente un système de passerelle qui est conçu pour adapter un format d'au moins certains des messages de communication (46) à transmettre entre, d'une part, l'au moins un émetteur-récepteur (29) et, d'autre part, l'au moins un branchement de bus (13) à une norme de communication prédéterminée.

6. Module d'antenne de toit (2) selon l'une quelconque des revendications précédentes, dans lequel le module d'antenne de toit (2) est exécuté en tant que composant d'une seule pièce.

7. Module d'antenne de toit (2) selon l'une quelconque des revendications précédentes, dans lequel au moins un système de branchement d'antenne (18) est fourni pour le branchement respectif d'une antenne supplémentaire externe au module (18), dans lequel l'au moins un système de branchement d'antenne (18) est respectivement connecté directement à l'au moins un émetteur-récepteur (29) ou à l'unité de commande de communication (26).

8. Module d'antenne de toit (2) selon l'une quelconque des revendications précédentes, dans lequel au moins un système de réception (28) est fourni pour un signal de position (2) d'un système mondial de navigation par satellite, GNSS, et l'unité de commande de communication (26) présente un système d'extrapolation (38) qui est conçu pour, en cas d'absence du signal de position (22), déterminer une position de véhicule (37) sur la base de données de fonctionnement du véhicule automobile (1) reçues par le biais de l'au moins un branchement de bus (13) depuis le bus de communication (15) respectif et de la fournir à l'au moins un branchement de bus (13).

9. Module d'antenne de toit (2) selon l'une quelconque des revendications précédentes, dans lequel l'unité de commande de communication (26) et/ou l'au moins un émetteur-récepteur (29) est conçu pour régler un codage d'erreur et/ou un procédé d'émission et/ou un procédé de réception pour les messages de communication (46) en fonction d'un signal d'environnement décrivant un environnement du véhicule automobile (1).

10. Module d'antenne de toit (2) selon l'une quelconque des revendications précédentes, dans lequel l'unité de commande de communication (26) présente un système de diagnostic (48) qui est conçu pour émettre, par le biais de l'au moins un branchement de bus (13) et/ou par le biais de l'au moins un émetteur-récepteur (29), respectivement des données de diagnostic qui décrivent un état de fonctionnement actuel du module d'antenne de toit (2) et/ou des erreurs détectées durant un fonctionnement du module d'antenne de toit (2).

11. Module d'antenne de toit (2) selon l'une quelconque des revendications précédentes, dans lequel un module d'alimentation (25) du module d'antenne de toit (2) est connecté par le biais d'une ligne de réveil (43) à l'au moins un émetteur-récepteur (29) et est conçu pour, en cas d'unité de commande de communication (26) hors tension, recevoir un signal de réveil (44) par le biais de l'au moins un émetteur-récepteur (29) et pour mettre sous tension l'unité de commande de communication (26) lors de la réception du signal de réveil (44).

12. Véhicule automobile (1) avec au moins un bus de communication (15) numérique et avec un module d'antenne de toit (2) branché à l'au moins un bus de communication (15) selon l'une quelconque des revendications précédentes.

13. Procédé de fonctionnement d'un module d'antenne de toit (2) selon l'une quelconque des revendications 1 à 11, dans lequel, par l'unité de commande de communication (26) du module d'antenne de toit (2), au moins un émetteur-récepteur (29) du module d'antenne de toit (2) est couplé à au moins un branchement de bus (13) du module d'antenne de toit (2) et des messages de communication (46) sont transmis entre, d'une part l'au moins un émetteur-récepteur (29) et, d'autre part, l'au moins un branchement de bus (13),
**caractérisé en ce que**
un système de filtre (50) de l'unité de commande de communication (26) transfère une instruction de commande (46'), reçue par le biais de l'au moins un émetteur-récepteur (29) par radio depuis l'extérieur du véhicule automobile (1) et adressée à un participant au bus (16) d'un bus de communication (15) branché par le biais de l'au moins un branchement de bus (13), à l'au moins un branchement de bus (13) uniquement dans le cas où l'instruction de commande (46') satisfait un critère de sécurité (51) prédéterminé.
